# EUROPÄISCHE PATENTSCHRIFT

(11) **EP 0 995 500 B1**
(45) Veröffentlichungstag und Bekanntmachung des Hinweises auf die Patenterteilung: **08.11.2000**
(21) Anmeldenummer: 99117455.8
(22) Anmeldetag: 09.09.1999
(51) Int. Cl.: B07B 1/00, B07B 1/46, C01B 33/02

(54) **Klassieren von Halbleitermaterial**
Classification of semiconductor material
Classification de matériaux semiconducteurs

(30) Priorität: 13.10.1998 DE 19847099
(43) Veröffentlichungstag der Anmeldung: 26.04.2000
(73) Patentinhaber: Wacker-Chemie GmbH, 81737 München (DE)
(72) Erfinder: Wolf, Reinhard, 84547 Emmerting (DE); Flottmann, Dirk, Dr., 84503 Altötting (DE)
(74) Vertreter: Budczinski, Angelika

(56) Entgegenhaltungen:
- EP-A- 0 497 497
- DE-A- 19 716 374
- US-A- 5 165 548

## Beschreibung

Die Erfindung betrifft ein Verfahren zum kontaminationsfreien Klassieren von Halbleitermaterial und eine Vorrichtung zur Durchführung des Verfahrens.

Für die Herstellung von Solarzellen oder elektronischen Bauelementen, wie beispielsweise Speicherelementen oder Mikroprozessoren, wird hochreines Halbleitermaterial benötigt. Silicium ist das in der Elektronikindustrie mit Abstand am meisten verwendete Halbleitermaterial. Reines Silicium wird durch thermische Spaltung von Siliciumverbindungen, wie beispielsweise Trichlorsilan, gewonnen und fällt dabei häufig in Form von polykristallinen Stäben an. Die Stäbe werden als Ausgangsmaterial beispielsweise zur Herstellung von Einkristallen benötigt. Zur Herstellung von Einkristallen nach dem Czochralski-Verfahren müssen die Stäbe zunächst in Bruchstücke zu etwa 100 mm zerkleinert werden. Diese Bruchstücke werden in einem Tiegel geschmolzen und anschließend wird der Einkristall aus der entstandenen Schmelze gezogen. Im günstigsten Fall sollten dabei die gezielt in das Halbleitermaterial eingebrachten Dotierstoffe die einzige Verunreinigung sein, die im Halbleitermaterial vorliegt.

Es sind verschiedene Verfahren zum Klassieren der beim Zerkleinerungsvorgang erhaltenen Siliciumbruchstücke bekannt. Um Kontamination beim Klassieren durch die Siebe zu vermeiden, werden die Siebe häufig mit geätzten Siliciumplatten belegt. Einzelne Siebe, z.B. solche mit einem Lochdurchmesser von < 40 mm, können vollständig aus Siliciumformteilen bestehen. Derartige Siebe haben jedoch den Nachteil, daß sie durch die Übertragung der Kräfte während des Klassiervorgangs abgenutzt bzw. beschädigt werden und ersetzt werden müssen, wobei die Siebanlage während des Austausches der zerstörten Teile nicht benutzt werden kann.

Hinzu kommt, daß die Herstellung der mit Silicium beschichteten Siebe sowie der Siliciumsiebe aufwendig ist. Im allgemeinen erfordert sie die zusätzliche Abscheidung von Silicium, mechanische Bearbeitung bei der Herstellung der Formteile und deren aufwendige Reinigung, zum Beispiel durch Ätzen mit HF/HNO₃. Da keine Stücke der Beschichtung oder der Formteile in den gesiebten Bruch gelangen dürfen, muß dieser manuell sortiert und kontrolliert werden.

Es ist daher Aufgabe der Erfindung die Nachteile des Standes der Technik zu überwinden und eine Vorrichtung und ein Verfahren zur Verfügung zu stellen, das die zusätzliche Kontamination von Halbleitermaterial beim Klassieren vermindert. Diese Aufgabe wird durch die Erfindung gelöst.

Gegenstand der Erfindung ist ein Verfahren zum Klassieren von Halbleitermaterial, welches dadurch gekennzeichnet ist, daß der Klassiervorgang auf mit Eis aus Reinstwasser, gegebenenfalls im Gemisch mit Partikeln aus Halbleitermaterial, beschichteten Sieben stattfindet, die Siebe während des Klassierens mit Reinstwasser besprüht und die Sieblöcher freigeschnitten werden.

Bei dem erfindungsgemäßen Verfahren kann es sich um beliebige, bisher bekannte Siebverfahren handeln, wobei das Schwingsieben wegen der besonders guten Trennung bevorzugt ist.

Ein weiterer Gegenstand der vorliegenden Erfindung ist eine Vorrichtung zum Klassieren von Halbleitermaterial, die dadurch gekennzeichnet ist, daß die Siebe aus Rohrnetzen konstruiert sind und eine Eisschicht aus Reinstwasser, gegebenenfalls im Gemisch mit Partikeln aus Halbleitermaterial, aufweisen.

Die erfindungsgemäße Vorrichtung und das erfindungsgemäße Verfahren werden vorzugsweise dazu genutzt, Halbleitermaterial, wie Silicium, Germanium oder Galliumarsenid, zu zerkleinern, wobei Silicium, insbesondere ultrareines Polysilicium, bevorzugt ist. Es können damit aber auch beliebige andere feste Materialien siebklassiert werden.

Die erfindungsgemäße Vorrichtung wird dadurch hergestellt, daß die Siebe aus Rohrnetzen, die aus Stahl, Kunststoff oder einem anderen geeigneten Material bestehen können, konstruiert werden, auf deren Oberfläche eine Eisschicht aus Reinstwasser gegebenenfalls im Gemisch mit Partikeln aus Halbleitermaterial hergestellt wird.

Die Siebe, die zur Herstellung der erfindungsgemäßen Vorrichtung mit Eis beschichtet werden, können grundsätzlich die gleichen sein, die auch bisher in Verfahren zum Siebklassieren von Halbleitermaterialien verwendet worden sind, wobei die Siebe insbesondere mit Reinstsilicium beschichtet sind.

Die Eisschicht der erfindungsgemäßen Vorrichtung wird hergestellt, indem es auf der Oberfläche der Siebe abgeschieden wird, wobei die Rohrnetze der Siebe von einer Kälteflüssigkeit, wie z.B. vorzugsweise einer wäßrigen Kaliumcarbonat-Lösung, durchströmt werden. Die Kälteflüssigkeit wird in einer Kältemaschine auf vorzugsweise unter -15°C und besonders bevorzugt auf weniger als -25°C abgekühlt und durch die Rohrnetze gepumpt. Während des Abkühlvorgangs und in der Folgezeit werden die Siebe mit Reinstwasser, welches einen spezifischen Leitwert von vorzugsweise kleiner 0,01 µS/cm aufweist, besprüht. Der Sprühvorgang wird so lange fortgesetzt, bis die Schicht vorzugsweise auf eine Dicke von 0,3 cm bis 3 cm, besonders bevorzugt auf 0,5 cm bis 1 cm, angewachsen ist. Die Rohrnetze der Siebe werden bei der erfindungsgemäßen Vorrichtung so dimensioniert, daß trotz der Eisschicht um die Rohre die Sieblöcher die gewünschte Größe haben.

Nach dem erfindungsgemäßen Verfahren werden die Siebe während des Klassierens von Halbleiterbruch weiter mit Reinstwasser besprüht, damit eventuell entstehende Löcher und Risse in der Beschichtung sofort wieder geschlossen werden. Durch das erfindungsgemäße Besprühen des Halbleiterbruches während des Klassiervorgangs wird zusätzlich der normalerweise entstehende Halbleiterstaub niedergeschlagen. Dies hat den vorteilhaften Nebeneffekt, daß die so erhaltene, mit Halbleiterstaub durchsetzte Eisschicht eine sehr hohe Standzeit hat, da Spannungen im Vergleich zu einer reinen Eisschicht abgebaut sind.

Damit die Größe der Sieblöcher während des Klassierens konstant bleibt, werden diese regelmäßig freigeschnitten, um eine gleichbleibende Zielgröße des Klassiervorgangs (Bruchgröße) zu erhalten. Das Freischneiden der Sieblöcher kann beispielsweise durch Hochdruckwasserstrahlen oder Infrarot-Laser erfolgen.

Durch die Dicke der Eisschicht im Querschnitt der Sieblöcher kann die Zielgröße des Klassiervorgangs durch angepaßtes Freischneiden in gewissen Grenzen gesteuert werden, was dem erfindungsgemäßen Verfahren vorteilhafterweise einen hohen Grad an Flexibilität verleiht.

Es ist selbstverständlich, daß bei Durchführung des erfindungsgemäßen Verfahrens die erfindungsgemäße Vorrichtung gekühlt wird, um ein Auftauen der Eisschichten zu verhindern.

Das erfindungsgemäße Verfahren hat des weiteren den Vorteil, daß der Klassiervorgang wegen der dauernden Regeneration der Eisbeschichtung mehr oder weniger ohne Prozessunterbrechung durchgeführt werden kann.

Falls erwünscht kann das im erfindunsggemäßen Verfahren verwendete Sieb auch aus zwei miteinander verbundenen trogartigen Siebteilen bestehen, die unabhängig voneinander gekühlt werden können. Während das eine Sieb in waagrechter Lage benutzt wird, wird das zweite abgetaut und neu vereist. Anschließend wird dieses während einer kurzen Prozessunterbrechung waagrecht anstelle des ersten in den Weg des Siliciumbruches geschwenkt und der Klassiervorgang kann sofort fortgesetzt werden, während die Regeneration des ersten Siebs durchgeführt wird.

Nach dem Klassiervorgang können die erhaltenen Siebfraktionen, falls erforderlich, nach bekannten Verfahren getrocknet sowie von Siliciumstaub befreit werden. Getrocknet kann das Material beispielsweise durch Strahlungsheizer werden. Zur Entfernung von Feinstaub wird das Material z.B. mit Druckluft ausgeblasen.

Die sonst übliche Kontrolle zur Verhinderung der Kontamination des Halbleiterproduktes durch eine beschädigte Klassiervorrichtung kann entfallen, was ein großer Vorteil ist.

Des weiteren hat das erfindungsgemäße Verfahren den Vorteil, daß Halbleitermaterial kontaminationsfrei klassiert werden kann.

## Patentansprüche

1. Verfahren zum Klassieren von Halbleitermaterial, welches dadurch gekennzeichnet ist, daß der Klassiervorgang auf mit Eis aus Reinstwasser, gegebenenfalls im Gemisch mit Partikeln aus Halbleitermaterial, beschichteten Sieben stattfindet, die Siebe während des Klassierens mit Reinstwasser besprüht und die Sieblöcher freigeschnitten werden.

2. Verfahren nach Anspruch 1, dadurch gekennzeichnet, daß es sich bei dem Halbleitermaterial um Silicium handelt.

3. Verfahren nach Anspruch 1 oder 2, dadurch gekennzeichnet, daß das Freischneiden der Sieblöcher mit Hochdruckwasserstrahlen erfolgt.

4. Verfahren nach Anspruch 1 oder 2, dadurch gekennzeichnet, daß das Freischneiden der Sieblöcher mit Infrarot-Laser erfolgt.

5. Vorrichtung zum Klassieren von Halbleitermaterial, die dadurch gekennzeichnet ist, daß die Siebe aus Rohrnetzen konstruiert sind und eine Eisschicht aus Reinstwasser, gegebenenfalls im Gemisch mit Partikeln aus Halbleitermaterial, aufweisen.

6. Vorrichtung nach Anspruch 5, dadurch gekennzeichnet, daß es sich bei dem Halbleitermaterial um Silicium handelt.

## Claims

1. Method for the classification of semiconductor material, which is characterized in that the classification procedure is carried out on screens coated with ice made of ultrapure water, optionally mixed with particles of semiconductor material, the screens are sprayed during the classification with ultrapure water and the screen holes are cut free.

2. Method according to Claim 1, characterized in that the semiconductor material is silicon.

3. Method according to Claim 1 or 2, characterized in that the screen holes are cut free using high pressure water jets.

4. Method according to Claim 1 or 2, characterized in that the screen holes are cut free using infrared lasers.

5. Device for the classification of semiconductor material, which is characterized in that the screens are constructed from tube networks and have an ice layer made of ultrapure water, optionally mixed with particles of semiconductor material.

6. Device according to Claim 5, characterized in that the semiconductor material is silicon.

## Revendications

1. Procédé de classification de matériau semi-conducteur, qui est caractérisé en ce que la procédure de classification a lieu dans des tamis revêtus de glace faite d'eau ultra-pure, le cas échéant en mélange avec des particules de matériau semi-conducteur, en ce que les tamis sont soumis pendant la classification à une pulvérisation à l'aide d'eau ultra-pure et en ce que les trous de tamis sont dégagés par découpage.

2. Procédé selon la revendication 1, caractérisé en ce que le matériau semi-conducteur est le silicium.

3. Procédé selon la revendication 1 ou 2, caractérisé en ce que le découpage des trous de tamis se fait à l'aide de jets d'eau à haute pression.

4. Procédé selon la revendication 1 ou 2, caractérisé en ce que le découpage des trous de tamis se fait à l'aide d'un laser infrarouge.

5. Dispositif de classification de matériau semi-conducteur, qui est caractérisé en ce que les tamis sont construits à partir de réseaux tubulaires et présentent une couche de glace faite d'eau ultra-pure, le cas échéant en mélange avec des particules de matériau semi-conducteur.

6. Dispositif selon la revendication 5, caractérisé en ce que le matériau semi-conducteur est le silicium.
